(19) Europäisches Patentamt
European Patent Office
Office européen des brevets

(11) **EP 1 680 315 B1**

(12) **EUROPÄISCHE PATENTSCHRIFT**

(45) Veröffentlichungstag und Bekanntmachung des Hinweises auf die Patenterteilung:
**22.04.2009 Patentblatt 2009/17**

(21) Anmeldenummer: **04786777.5**

(22) Anmeldetag: **15.09.2004**

(51) Int Cl.:
***B60G 17/015*** (2006.01)

(86) Internationale Anmeldenummer:
**PCT/DE2004/002057**

(87) Internationale Veröffentlichungsnummer:
**WO 2005/039955 (06.05.2005 Gazette 2005/18)**

(54) **AN DEN BELADUNGSZUSTAND EINES FAHRZEUGS ANGEPASSTES FAHRDYNAMIKREGELUNGSSYSTEM**

DRIVING DYNAMICS CONTROL SYSTEM ADAPTED TO THE LOADING STATUS OF A VEHICLE

ADAPTATION DU SYSTEME DE REGULATION ELECTRONIQUE DU COMPORTEMENT DYNAMIQUE A L'ETAT DE CHARGE D'UN VEHICULE

(84) Benannte Vertragsstaaten:
**DE FR GB IT SE**

(30) Priorität: **24.10.2003 DE 10349635**
**11.02.2004 DE 102004006696**

(43) Veröffentlichungstag der Anmeldung:
**19.07.2006 Patentblatt 2006/29**

(73) Patentinhaber: **ROBERT BOSCH GMBH**
**70442 Stuttgart (DE)**

(72) Erfinder:
• **NENNINGER, Gero**
**71706 Markgroeningen (DE)**
• **NIMMO, Matthew**
**71368 Ludwigsburg (DE)**
• **GRAF, Gerald**
**71116 Gaertringen (DE)**
• **BOROS, Laszlo**
**70825 Korntal (DE)**

(56) Entgegenhaltungen:
**EP-A- 1 046 571**     **EP-A- 1 129 916**
**EP-A- 1 319 535**     **DE-A1- 10 032 079**
**US-A- 4 480 714**     **US-A- 5 825 284**
**US-A1- 2003 050 741**     **US-B1- 6 424 907**

• **PATENT ABSTRACTS OF JAPAN Bd. 016, Nr. 391 (M-1298), 19. August 1992 (1992-08-19) & JP 04 128521 A (NORIHARU NAKAMURA), 30. April 1992 (1992-04-30)**

## Beschreibung

Die Erfindung betrifft ein Verfahren zum Stabilisieren eines Fahrzeugs in kippkritischen Situationen gemäß dem Oberbegriff des Patentanspruchs 1, sowie ein Fahrdynamikregelungssystem zur Kippstabilisierung eines Fahrzeugs gemäß dem Oberbegriff des Patentanspruchs 6.

Aus der US 2003/050741 A1 ist ein Verfahren zur Vermeidung von Überrollvorgängen an Sattelanhängern bekannt. Dabei werden bei unangemessener Fahrweise Warnhinweise für den Fahrzeugführer ausgegeben. Der Schwerpunkt der Ladung des Sattelanhängers wird in einem Bordrechner rechnerisch ermittelt. Aus dem so ermittelten Schwerpunkt und der bekannten Masse des Sattelanhängers wird mit dem Bordrechner in Abhängigkeit von augenblicklichen Fahrparametern ein Überrollgrenzwert rechnerisch ermittelt, bei dessen Überschreiten die Warnung des Fahrzeugführers erfolgt.

Aus der US-A-4 480 714 ist eine Vorrichtung zur Verhinderung des Seitwärtskippens eines Fahrzeuges, insbesondere eines Portalhubwagens, der eine Ladung, insbesondere einen Container trägt, bekannt. Die Vorrichtung ist gekennzeichnet durch eine Messeinrichtung zur Erfassung des Gewichts der Ladung, eine Messeinrichtung zur Erfassung der Höhe des Schwerpunkts der Ladung, eine Messeinrichtung zur Erfassung des Steuerwinkels des Fahrzeugs, eine Messeinrichtung zur Erfassung der Geschwindigkeit des Fahrzeugs, eine Einrichtung zur Ermittlung der Höhe des Gesamtschwerpunkts von Fahrzeug und Ladung aus dem Gewicht und der Höhe des Schwerpunkts des Fahrzeugs und dem gemessenen Gewicht und der gemessenen Höhe des Schwerpunkts der Ladung sowie eine Einrichtung zur Ermittlung der statischen Stabilität des Fahrzeuges aus der Höhe des Gesamtschwerpunkts, eine Einrichtung zur Ermittlung der dynamischen Instabilität des Fahrzeugs während der Kurvenfahrt aus dem gemessenen Steuerwinkel und der gemessenen Fahrgeschwindigkeit des Fahrzeugs, eine Einrichtung zum Vergleich der dynamischen Stabilität mit der statischen Stabilität und zur Aussendung eines Steuersignals, wenn die dynamische Instabilität eine zulässige, von der statischen Stabilität abhängige Grenze übersteigt und eine Einrichtung zur Steuerung der Fahrgeschwindigkeit, angesteuert durch das Steuersignal.

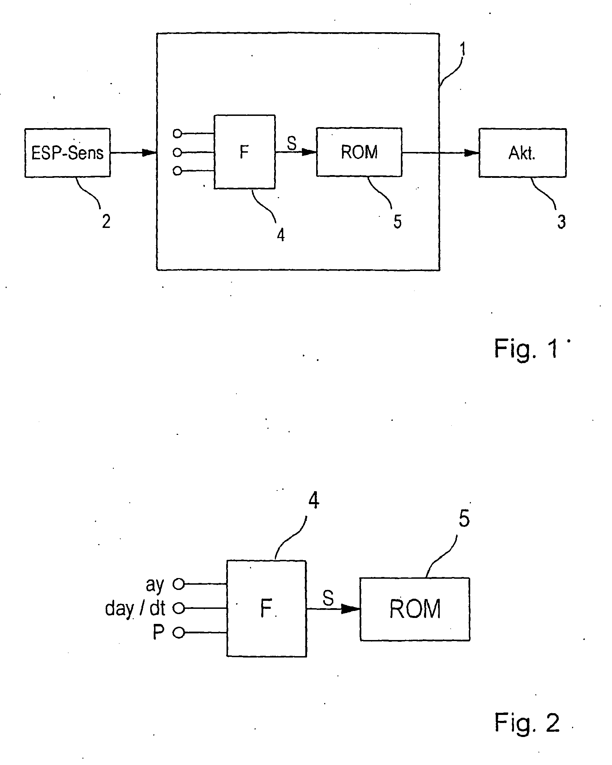

Fahrzeuge mit hohem Schwerpunkt, wie z..B: Minivans, SUVs (Sport Utility Vehicles) oder Transporter, neigen insbesondere bei Kurvenfahrten mit zu hoher Querbeschleunigung zum Kippen um die Längsachse. Es werden daher häufig Kippstabilisierungssysteme, wie z.B. ROM (Roll-Over-Mitigation) eingesetzt, mit denen kippkritische Situationen frühzeitig erkannt und Stabilisierungsmaßnahmen ausgelöst werden können. Bekannte Fahrdynamikregelungssysteme, wie z.B. ESP, mit Kippstabilisierungsfunktion (ROM) greifen in der Regel mittels des Bremssystems, des Motormanagements oder einer aktiven Lenkung in den Fahrbetrieb ein, um das Fahrzeug zu stabilisieren. Ein aus dem Stand der Technik bekanntes Fahrdynamikregelungssystem mit ROM-Funktion ist beispielhaft in Fig. 1 dargestellt.

Fig. 1 zeigt eine stark vereinfachte schematische Blockdarstellung eines bekannten ROM-Systems, das im wesentlichen ein Steuergerät 1 mit einem ROM-Regelalgorithmus 4,5, eine Sensorik 2 zum Erkennen eines kippkritischen Fahrzustandes und einen Aktuator 3 zum Durchführen eines Stabilisierungseingriffs umfasst. Erkennt das Steuergerät 1 aufgrund der Sensorsignale der ESP-Sensorik 2 eine kippkritische Situation, greift die Fahrdynamikregelung z.B. durch Betätigung der Radbremse am kurvenäußeren Vorderrad in den Fahrbetrieb ein. Dadurch wird die Querbeschleunigung und die Giergeschwindigkeit des Fahrzeugs verringert und das Fahrzeug stabilisiert. Andere Systeme nutzen z.B. ein aktives Feder/Dämpfersystem (Normalkraftverteilungssystem), das Motormanagement oder ein aktives Lenksystem, um das Fahrzeug zu stabilisieren.

Eine wesentliche Ursache für das Kippen eines Fahrzeugs um die Längsachse ist in der Regel eine zu hohe Querbeschleunigung. Moderne Fahrdynamikregelungssysteme nutzen daher üblicherweise eine die Querdynamik des Fahrzeugs beschreibende Größe (die im Folgenden als Indikatorgröße S bezeichnet wird), um eine kippkritische Fahrsituation zu erkennen. Die Indikatorgröße wird mit einem charakteristischem Schwellenwert verglichen und bei Überschreiten der Schwelle ein Stabilisierungseingriff ausgelöst. Die Indikatorgröße bestimmt üblicherweise auch die Stärke des Stabilisierungseingriffs.

Fig. 2 zeigt die verschiedenen Eingangsgrößen, die in die Berechnung der Indikatorgröße S einfließen. Eine wesentliche Komponente ist dabei die Querbeschleunigung ay des Fahrzeugs. Da die Querbeschleunigung ay der Lenkvorgabe (Lenkradstellung) phasenverzögert folgt, wird der Messwert der Querbeschleunigung ay üblicherweise in Abhängigkeit von der Änderung des Lenkwinkels und gegebenenfalls weiterer Einflussgrößen P, wie z.B. der zeitlichen Änderung der Querbeschleunigung $d_{ay}/dt$, erhöht. Die resultierende sogenannte effektive Querbeschleunigung, die gleichzeitig die Indikatorgröße S bildet, ist somit eine Funktion F der Querbeschleunigung $a_y$, der zeitlichen Änderung der Querbeschleunigung $d_{ay}/dt$ des Fahrzeugs und gegebenenfalls weiterer Einflussgrößen P.

Wie in Fig.2 zu erkennen ist, werden die Eingangsgrößen $a_y, d_{ay}/dt, P$ gemäß einer Funktion 4 verknüpft und daraus die Indikatorgröße S berechnet. Die so gewonnene Indikatorgröße S wird schließlich dem Regelalgorithmus 5 zugeführt und bestimmt die Dauer und Stärke des Regeleingriffs.

Das Kippverhalten eines Fahrzeugs ist neben den konstruktiven Eigenschaften des Fahrzeugs im wesentlichen von der Beladung abhängig. Mit zunehmender Beladung wächst in der Regel die Kippneigung des Fahrzeugs und umgekehrt. Darüber hinaus können sich auch konstruktive Merkmale, wie z.B. die Federung, altersbedingt verändern und somit auf die Kippneigung des Fahrzeugs auswirken. Beladung und mechanischer Zustand werden bei den bekannten Fahrdynamikregelungen mit Kippstabilisierungsfunktion ROM üblicherweise nicht explizit berücksichtigt.

Bekannte Kippstabilisierungsfunktionen ROM sind daher üblicherweise sehr empfindlich, d.h. auf hohe Beladungszustände und weiche Federung abgestimmt, um insbesondere bei Fahrzeugen mit hoher Beladungsvarianz wie z.B. SUVs oder Kleintransportern, ein sicheres Fahrverhalten zu gewährleisten. Dies führt dazu, dass bei normaler Beladung ein Stabilisierungseingriff schon bei sehr niedrigen Querbeschleunigungswerten ausgelöst wird. D.h., bei normaler oder geringer Beladung können die Kippstabilisierungseingriffe zu früh und zu heftig stattfinden.

Es ist daher die Aufgabe der vorliegenden Erfindung, ein Verfahren zur Kippstabilisierung von Fahrzeugen, sowie ein entsprechendes Fahrdynamikregelungssystem zu schaffen, mit dem der Beladungszustand eines Fahrzeug und somit dessen Kippneigung in einfacher Weise abgeschätzt und im Rahmen eines Kippstabilisierungsalgorithmus berücksichtigt werden kann.

Gelöst wird diese Aufgabe gemäß der Erfindung durch die im Patentanspruch 1 sowie im Patentanspruch 9 angegebenen Merkmale. Weitere Ausgestaltungen der Erfindung sind Gegenstand von Unteransprüchen.

Ein wesentlicher Aspekt der Erfindung besteht darin, die aktuelle Kippneigung des Fahrzeugs zu bestimmen, indem wenigstens die Masse des Fahrzeugs (oder der Zuladung) ermittelt wird, und das Reglerverhalten des Kippstabilisierungsalgorithmus auf die aktuelle Fahrzeugmasse abzustimmen.. Dadurch kann der Kippstabilisierungsalgorithmus an den jeweiligen Beladungszustand bzw. die jeweilige Kippneigung des Fahrzeugs angepasst werden.

Die Fahrzeugmasse kann z.B. mittels einer Sensorik, wie z.B. einer Radkraftsensorik zur Bestimmung der Normalkräfte (Radaufstandskräfte) oder einer Sensorik zur Messung des Einfederwegs bestimmt werden. Wahlweise kann die Fahrzeugmasse auch durch Auswertung des Fahrverhaltens, wie z.B. des Beschleunigungs- oder Bremsverhaltens des Fahrzeugs, unter Aufstellung einer Kräfte- oder Momentenbilanz geschätzt werden. Hierzu sind verschiedene Schätzverfahren bereits bekannt. Das Schätzen der Fahrzeugmasse hat den Vorteil, dass neben der ohnehin vorhandenen ESP-Sensorik keine weitere Sensorik vorgesehen werden muss. Zum Schätzen der Fahrzeugsmasse werden z.B. die Raddrehzählsensoren und das Motormomentensignal ausgewertet, optional ein Querbeschleunigungs- und Gierratensensor, ein Lenkwinkelsensor und/oder ein Längsbeschleunigungssensor.

Die erhaltene (gemessene oder geschätzte) Information über die Fahrzeugmasse kann schließlich von der Fahrdynamikregelung berücksichtigt werden.

Die Kippneigung eines Fahrzeugs wird neben der Höhe (Masse) der Zuladung insbesondere auch durch die Position bzw. Verteilung der Zuladung beeinflusst. Es wird daher vorgeschlagen, vorzugsweise auch eine Information über die Position der Zuladung, insbesondere die Schwerpunktshöhe (der Zuladung oder des Fahrzeugs), zu ermitteln und bei der Kippstabilisierung zu berücksichtigen.

Gemäß einer ersten Ausführungsform der Erfindung wird der Fahrzeugschwerpunkt (dies umfasst auch eine Information, aus der sich der Fahrzeugschwerpunkt herleiten lässt) zusätzlich durch Auswertung einer charakteristischen Geschwindigkeit $V_{ch}$ des Fahrzeugs geschätzt. Die charakteristische Geschwindigkeit ist ein Parameter in der bekannten "Ackermann-Gleichung" und beschreibt das Eigenlenkverhalten eines Fahrzeugs. Bei üblicher Fahrwerksauslegung gilt, dass ein Fahrzeug bei einer Verschiebung des Schwerpunkts nach oben ein stärker untersteuerndes Fahrverhalten zeigt und somit eine kleinere charakteristische Geschwindigkeit hat und umgekehrt. Bei einer Verschiebung des Schwerpunkts (bei konstanter Masse und Schwerpunktshöhe) nach hinten; zeigt ein Fahrzeug dagegen ein weniger untersteuerndes Fahrverhalten und somit eine höhere charakteristische Geschwindigkeit $V_{ch}$ und umgekehrt. Die charakteristische Geschwindigkeit $V_{ch}$ wird bei bekannten Fahrdynamikregelungen üblicherweise selbst wiederum geschätzt. Aus der Abweichung der geschätzten charakteristischen Geschwindigkeit $V_{chEst}$ von der nominalen charakteristischen Geschwindigkeit $V_{chNom}$ kann somit zumindest qualitativ eine Information über die Position der Ladung (Höhe des Schwerpunkts und/oder Position in Längsrichtung des Fahrzeugs) gewonnen werden.

Gemäß einer zweiten Ausführungsform der Erfindung kann die Position des Fahrzeugschwerpunkts und insbesondere die Schwerpunktshöhe aus einer Betrachtung der Radaufstandskräfte an einem kurveninneren und einem kurvenäußeren Rad bei einer Kurvenfahrt geschätzt werden. Bei einem hohen Massenschwerpunkt ist die Radaufstandskraft am kurvenäußeren Rad vergleichsweise höher als bei einem niedrigen Massenschwerpunkt (gleiche Masse der Zuladung) bei gleicher Querbeschleunigung. Durch die erhöhte Kippneigung des Fahrzeugs werden die kurveninneren Räder bei hohem Massenschwerpunkt stärker entlastet. Aus dem Verhältnis der Radaufstandskräfte $F_{N1}/F_{Nr}$ eines kurveninneren und eines kurvenäußeren Rades lässt sich somit die Höhe des Fahrzeugschwerpunkts qualitativ abschätzen.

Die Radaufstandskräfte $F_N$ können wiederum entweder mittels einer geeigneten Sensorik gemessen oder aus dem Verhältnis der Radschlüpfe der einzelnen Räder geschätzt werden. Die Radschlüpfe können wiederum mittels der ohnehin vorhandenen ESP-Sensorik, insbesondere der Raddrehzahlsensoren, berechnet werden.

Gemäß einer dritten Ausführungsform der Erfindung können die in den Ausführungsformen 1 und 2 beschriebenen Schätzverfahren kombiniert werden, um eine qualitative Verbesserung und eine höhere Verfügbarkeit der geschätzten Schwerpunktshöhe zu erreichen.

Die erfindungsgemäß ermittelte Information über die Kippneigung des Fahrzeugs (d.h. die Fahrzeugmasse und ggf. zusätzlich die geschätzte Position des Schwerpunkts) kann gemäß einer ersten Ausführungsform in die Berechnung der Indikatorgröße S einfließen und somit den Auslösezeitpunkt bzw. Deaktivierungszeitpunkt der Regelung beeinflussen.

Wahlweise kann die Information über die Kippneigung auch in den Kippstabilisierungsalgorithmus selbst einfließen und eine charakteristische Eigenschaft des Algorithmus, wie z.B. eine Anregelschwelle ($a_{y,\,krit}$), eine Regelabweichung, z.B. für einen Radschlupf, oder eine Stellgröße, wie z.B. das Bremsmoment oder das Motormoment, beeinflussen. Die charakteristische Eigenschaft des Algorithmus ist somit eine Funktion der Kippneigung des Fahrzeugs, d.h. der Fahrzeugmasse und ggf. zusätzlich der Position des Fahrzeugschwerpunkts. Bei hoher Kippneigung, d.h. hoher Fahrzeugmasse oder hohem Schwerpunkt, kann somit ein Stabilisierungseingriff früher eingeleitet oder mit stärkerem Ausmaß durchgeführt werden als bei geringer Kippneigung.

Ein erfindungsgemäßes Fahrdynamikregelungssystem mit Kippstabilisierungsfunktion umfasst vorzugsweise eine Einrichtung (Sensorik oder Schätzalgorithmus), mittels der die Fahrzeugmasse und/oder die Position des Fahrzeugschwerpunkts berechnet oder geschätzt werden kann, ein Steuergerät, in dem der Kippstabilisierungsalgorithmus hinterlegt ist, wobei der Kippstabilisierungsalgorithmus derart realisiert ist, dass das Regelverhalten des Algorithmus von der Fahrzeugmasse und/oder der Position des Fahrzeugschwerpunkts abhängig ist.

Die Erfindung wird nachstehend anhand der beigefügten Zeichnungen beispielhaft näher erläutert. Es zeigen:

Fig. 1 eine schematische Blockdarstellung eines bekannten Kippstabilisierungssystems;

Fig. 2 eine schematische Darstellung einer Funktion zur Bildung einer Indikatorgröße S;

Fig. 3 eine Blockdarstellung eines Kippstabilisierungssystems gemäß einer Ausführungsform der Erfindung;

Fig. 4 die Schlupf- und Aufstandskraftverhältnisse bei Geradeaus- und Kurvenfahrt; und

Fig. 5. die Abhängigkeit der kritischen Querbeschleunigung von der Schwerpunktshöhe.

Bezüglich der Erläuterung der Fig. 1 und 2 wird auf die Beschreibungseinleitung verwiesen.

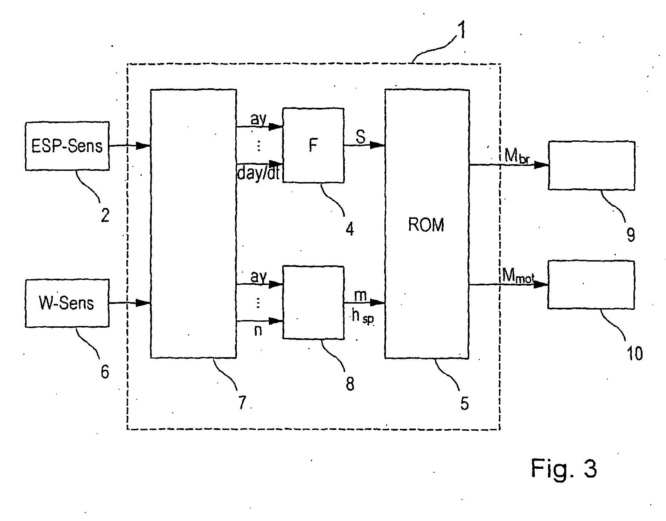

Fig. 3 zeigt eine schematische Blockdarstellung eines Kippstabilisierungssystems. Das System umfasst im wesentlichen ein Steuergerät 1 mit einem Kippstabilisierungsalgorithmus ROM (Roll-Over-Mitigation), eine Sensorik 2 zum Erfassen von Fahrzustandsgrößen und verschiedene Aktuatoren 9,10, mit denen die erforderlichen Stabilisierungseingriffe umgesetzt werden. Die Blocks 4,7,8 sind in Software realisiert und dienen der Verarbeitung der Sensorsignale (Block 7), der Schätzung der Kippneigung (durch Schätzung der Fahrzeugmasse und der Position des Schwerpunkts) des Fahrzeugs (Block 8), und der Erzeugung einer Indikatorgröße S (Block 4).

Das Kippstabilisierungssystem nutzt in diesem Beispiel ausschließlich die bereits vorhandene ESP-Sensorik 2 sowohl zum Erkennen einer kippkritischen Fahrsituation als auch zum Schätzen der Fahrzeugmasse m und der Höhe des Schwerpunkts $h_{sp.}$ (Wahlweise könnte auch eine zusätzliche Sensorik vorgesehen sein, mittels der die gesuchten Größen ($m, h_{sp}$) gemessen werden können.)

Die ESP-Sensorik 2 umfasst insbesondere Raddrehzahlsensoren, einen Lenkwinkelsensor, einen Querbeschleunigungssensor, einen Gierratensensor, etc.. Die Sensorsignale werden in Block 7 verarbeitet und dabei insbesondere entstört und gefiltert. Vorzugsweise wird auch eine Plausibilitätüberwachung der Sensorsignale durchgeführt.

Ausgewählte Signale, nämlich die Querbeschleunigung $a_y$, der Gradient $d_{ay}/dt$ und gegebenenfalls weitere Größen P fließen in den Block 4. Darin wird, wie vorstehend bezüglich Fig. 2 beschrieben wurde, eine Indikatorgröße S berechnet, die die Freigabe bzw. Deaktivierung von Stabilisierungseingriffen steuert. Die Indikatorgröße S bestimmt dabei auch die Stärke der Stabilisierungseingriffe.

Um unterschiedliche Beladungszustände des Fahrzeugs bei der Kippstabilisierung berücksichtigen zu können, ist zusätzlich ein Block 8 vorgesehen. Block 8 umfasst Algorithmen, mit denen sich die Fahrzeugmasse m (bzw. eine Information, aus der sich die Fahrzeugmasse ableiten lässt) und die Höhe des Fahrzeugschwerpunkts $h_{sp}$ schätzen lassen. Die gesuchten Schätzgrößen $m, h_{sp}$ werden insbesondere aus der Querbeschleunigung $a_y$, den Raddrehzahlen n, dem Motormoment und der Gierrate ermittelt.

Die Schätzwerte $m, h_{sp}$ werden schließlich dem Kippstabilisierungsalgorithmus zugeführt und dazu verwendet, eine charakteristische Eigenschaft des Algorithmus, wie z.B. eine Anregelschwelle ($a_{y,\,krit}$), eine Regelabweichung, z.B. für einen Radschlupf, oder eine Stellgröße, wie z.B. das Bremsmoment oder das Motormoment, zu verändern. Wahlweise könnte auch die Indikatorgröße S modifiziert werden. Die charakteristische Eigenschaft des Algorithmus ist somit eine Funktion der Fahrzeugmasse m und/oder der Position des Fahrzeugschwerpunkts $h_{sp}$. Bei hoher Kippneigung, d.h. hoher Fahrzeugmasse m oder hohem Schwerpunkt $h_{sp}$, kann somit ein Stabilisierungseingriff früher eingeleitet oder mit stärkerem Ausmaß durchgeführt werden als bei geringer Kippneigung.

Die Fahrzeugmasse m wird z.B. bei einem Brems- oder Beschleunigungsvorgang durch Aufstellung einer Kräftebilanz der am Fahrzeug wirkenden Kräfte unter Berücksichtigung der Beschleunigung bzw. Verzögerung des Fahrzeugs ermittelt.

Die Position des Schwerpunkts in z-Richtung (vertikale Richtung) als auch in Fahrzeuglängsrichtung (vorne, hinten) kann beispielsweise über die charakteristische Geschwindigkeit $V_{ch}$ des Fahrzeugs geschätzt werden. Die charakteristische Geschwindigkeit $V_{ch}$ ist ein Parameter, der das Eigenlenkverhalten eines Fahrzeugs beschreibt. Nach der Ackermann-Gleichung, die die Gierrate $d\psi/dt$ eines Fahrzeugs gemäß dem sogenannten "Einspurmodell" berechnet, gilt:

$$d\psi/dt = \frac{v_x \cdot \delta_R}{l \cdot \left(1 + v_x{}^2 : v_{ch}{}^2\right)}$$

wobei $v_x$ die Fahrzeuggeschwindigkeit in Längsrichtung, $\delta_R$ der Lenkwinkel, 1 der Radstand und $v_{ch}$ die charakteristische Geschwindigkeit ist.

Bei üblicher Fahrwerksauslegung gilt, dass ein Fahrzeug bei einer Verschiebung des Schwerpunkts nach oben ein stärker untersteuerndes Fahrverhalten zeigt und somit eine kleinere charakteristische Geschwindigkeit $v_{ch}$ hat und umgekehrt. Bei einer Verschiebung des Schwerpunkts (bei konstanter Masse und Schwerpunktshöhe) nach hinten, zeigt ein Fahrzeug dagegen ein weniger untersteuerndes Fahrverhalten und somit eine höhere charakteristische Geschwindigkeit $V_{ch}$ und umgekehrt.

Durch Abschätzung der charakteristischen Geschwindigkeit $V_{ch}$ aus der vorgenannten Beziehung lässt sich zumindest eine qualitative Information über die Position des Fahrzeugschwerpunkts bzw. die Verteilung der Zuladung im Fahrzeug ermitteln. Je nachdem, ob die geschätzte charakteristische Geschwindigkeit größer oder kleiner ist als ein Nominalwert $V_{ch,nominal}$ (z.B. ohne Zuladung) kann somit eine Aussage über die Position des Masseschwerpunkts getroffen werden. Die nachfolgende Tabelle gibt einen Überblick über die qualitativen Aussagen, die durch Abschätzung der charakteristischen Geschwindigkeit $V_{ch}$ getroffen werden können. Die erste Tabelle gilt dabei beispielhaft für kleine Zuladung und die zweite Tabelle für große Zuladung.

| kleine Zuladung | Beladung mittig | Beladung hinten |
|---|---|---|
| hoher Ladungsschwerpunkt | $v_{ch} < v_{ch\_nominal}$ | $v_{ch} < v_{ch\_nominal}$ |
| niedriger Ladungsschwerpunkt | $v_{ch} \approx v_{ch\_nominal}$ | $v_{ch} > v_{ch\_nominal}$ |
| hoher Ladungsscherpunkt | $v_{ch} << v_{ch\_nominal}$ | $v_{ch} < v_{ch\_nominal}$ |
| niedriger Ladungsschwerpunkt | $v_{ch} \approx v_{ch\_nominal}$ | $v_{ch} >> v_{ch\_nominal}$ |

Wahlweise kann die Schwerpunktshöhe auch aus den Radaufstandskräften an kurveninneren und kurvenäußeren Rädern bei Kurvenfahrt geschätzt werden. Bei einem hohen Massenschwerpunkt (d.h. hohe Zuladung) ist die Radaufstandskraft am kurvenäußeren Rad vergleichsweise höher als bei einem niedrigen Massenschwerpunkt bei gleicher Querbeschleunigung. Durch die erhöhte Kippneigung des Fahrzeugs werden die kurveninneren Räder bei hohem Massenschwerpunkt stärker entlastet. Aus dem Verhältnis der Radaufstandskräfte $F_{N1}/F_{Nr}$ kurveninnerer und kurvenäußerer Räder lässt sich somit die Höhe des Fahrzeugschwerpunkts qualitativ schätzen.

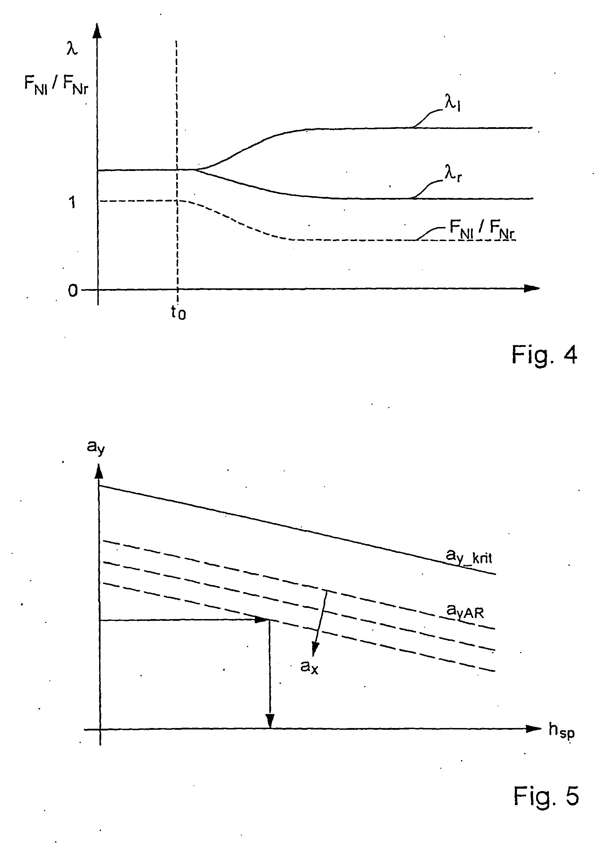

Fig. 4 zeigt den Verlauf des Radaufstandskraftverhältnis $F_{N1}/F_{Nr}$ und der Radschlüpfe $\lambda$ an einem linken und einem rechten Rad (Indizes 1,r; hier ist $F_{B1}$ = FBr). Bis zum Zeitpunkt $t_0$ fährt das Fahrzeug geradeaus und dann in eine Linkskurve. Der Radschlupf $\lambda_1$ (Antriebs- oder Bremsschlupf) am kurveninneren linken Rad nimmt dabei zu, der am rechen Rad ab. Das Radaufstandskraftverhältnis $F_{N1}/F_{Nr}$ sinkt entsprechend, wie in der Figur zu erkennen ist. Durch die Auswertung des Radaufstandskraftverhältnisses in Abhängigkeit von der Querbeschleunigung lässt sich wiederum die Schwerpunktshöhe schätzen.

Fig. 5 zeigt die Abhängigkeit der Querbeschleunigung $a_{yAR}$ (bei der das kurveninnere Hinterrad vom Boden abhebt) von der Schwerpunktshöhe $h_{sp}$ (Bei der kritischen Querbeschleunigung $a_{y\_krit}$ kippt das Fahrzeug um). Wie zu erkennen ist, nimmt die Querbeschleunigung $a_{yAR}$ mit zunehmender Schwerpunktshöhe $h_{sp}$ ab. Durch zusätzliches Bremsen (siehe Verzögerung $a_x$) reduziert sie sich weiter. Das Abheben eines Hinterrades kann somit erfasst und die Schwerpunkthöhe geschätzt werden.

Durch eine Kombination der beiden Verfahren zur Schwerpunktshöhen-Bestimmung lässt sich eine qualitative Verbesserung und eine höhere Verfügbarkeit der geschätzten Schwerpunktshöhe erreichen.

Bezugszeichenliste

| | |
|---|---|
| 1 | Steuergerät |
| 2 | ESP-Sensorik |
| 3 | Aktuator |
| 4 | Funktion zu Berechnung der Indikatorgröße |
| 5 | Kippstabilisierungsalgorithmus |
| 6 | zusätzliche Sensorik |
| 7 | Signalaufbereitung |
| 8 | Masse- und Schwerpunktsschätzung |
| 9 | Bremssystem |
| 10 | Motormanagement |
| S | Indikatorgröße |
| $F_N$ | Radaufstandskraft |
| $F_B$ | Radtangentialkraft |
| m | Fahrzeugmasse |
| $h_{sp}$ | Schwerpunktshöhe |
| ay | Querbeschleunigung |
| ax | Längsbeschleunigung |
| P | Parameter |
| n | Raddrehzahlen |
| λ | Radschlupf |

## Patentansprüche

1. Verfahren zur Kippstabilisierung eines Fahrzeugs in kritischen Fahrsituationen, bei dem ein Kippstabilisierungsalgorithmus (4,5,8) in einer kritischen Situation mittels eines Aktuators (3,9,10) in den Fahrbetrieb eingreift, um das Fahrzeug zu stabilisieren, wobei die Fahrzeugmasse (m) ermittelt wird, wobei
eine Information über den Fahrzeugschwerpunkt ($h_{sp}$) geschätzt und der Kippstabilisierungsalgorithmus (4,5,8) in Abhängigkeit von der Fahrzeugmasse (m) und der Information über den Fahrzeugschwerpunkt ($h_{sp}$) ausgeführt wird, **dadurch gekennzeichnet, dass** die Information über den Fahrzeugschwerpunkt ($h_{sp}$) aus der geschätzten charakteristischen Geschwindigkeit ($v_{ch}$) abgeleitet wird.

2. Verfahren nach Anspruch 1, **dadurch gekennzeichnet, dass** die Fahrzeugmasse (m) mittels eines Algorithmus (8) geschätzt wird.

3. Verfahren nach Anspruch 1, **dadurch gekennzeichnet, dass** die Information über den Fahrzeugschwerpunkt ($h_{sp}$) aus der geschätzten charakteristischen Geschwindigkeit ($v_{ch}$) und aus dem Verhältnis der Radaufstandskräfte ($F_{N1}/F_{Nr}$) gegenüber liegender Räder bei einer Kurvenfahrt ermittelt wird.

4. Verfahren nach einem der Ansprüche 1 bis 3, **dadurch gekennzeichnet, dass** eine Indikatorgröße (S) mittels der ein Stabilisierungseingriff freigegeben oder deaktiviert wird, oder eine charakteristische Eigenschaft des Kippstabilisierungsalgorithmus (4,5,8) in Abhängigkeit von der Fahrzeugmasse (m) oder der Fahrzeugmasse (m) und der Information über den Fahrzeugschwerpunkt ($h_{sp}$) bestimmt wird.

5. Verfahren nach einem der Ansprüche 1 bis 3, **dadurch gekennzeichnet, dass** eine Anregelschwelle, eine Regelabweichung oder eine Stellgröße des Kippstabilisierungsalgorithmus (4,5,8) in Abhängigkeit von der Fahrzeugmasse (m) oder der Fahrzeugmasse (m) und der Information über den Fahrzeugschwerpunkt ($h_{sp}$) bestimmt wird.

6. Fahrdynamikregelungssystem zur Kippstabilisierung eines Fahrzeugs in kritischen Fahrsituationen, umfassend ein Steuergerät (1), in dem ein Kippstabilisierungsalgorithmus (4,5,8) hinterlegt ist, eine Sensorik (2) zum Erfassen aktueller IstWerte von Fahrzustandsgrößen ($a_y$, day/dt, P,n) und einen Aktuator (3) zum Durchführen eines Stabilisierungseingriffs bei Erkennen einer kippkritischen Situation, wobei mittels der Sensorik (2) eine Information über die Fahrzeugmasse (m) ermittelt wird und der Kippstabilisierungsalgorithmus (4,5) derart eingerichtet ist, dass das Reglerverhalten eine Funktion der Fahrzeugmasse (m) ist, wobei

das Steuergerät (1) einen Algorithmus (8) zum Schätzen einer Information über den Fahrzeugschwerpunkt ($h_{sp}$) umfasst, wobei diese Information zusammen mit der Fahrzeugmasse (m) bei einer Kippstabilisierung berücksichtigt wird, **dadurch gekennzeichnet, dass** die Information über den Fahrzeugschwerpunkt ($h_{sp}$) aus der geschätzten charakteristischen Geschwindigkeit ($v_{ch}$) abgeleitet wird.

**7.** Fahrdynamikregelungssystem nach Anspruch 6, **dadurch gekennzeichnet, dass** das Steuergerät (1) einen Algorithmus (8) zum Schätzen der Fahrzeugmasse (m) umfasst.

**8.** Fahrdynamikregelungssystem nach Anspruch 6, **dadurch gekennzeichnet, dass** eine Sensorik (2,6) vorgesehen ist, mittels der ein Verhältnis der Radaufstandskräfte ($F_{N1}/F_{Nr}$) gegenüber liegender Räder ermittelt werden kann.

**Claims**

**1.** Method for stabilizing the tilting of a vehicle in critical driving situations, in which, in a critical situation, a tilt stabilization algorithm (4, 5, 8) intervenes in driving operations by means of an actuator (3, 9, 10) in order to stabilize the vehicle, wherein the mass (m) of the vehicle is determined, wherein information about the centre of gravity ($h_{sp}$) of the vehicle is estimated and the tilt stabilization algorithm (4, 5, 8) is carried out as a function of the mass (m) of the vehicle and the information about the centre of gravity ($h_{sp}$) of the vehicle, **characterized in that** the information about the centre of gravity ($h_{sp}$) of the vehicle is derived from the estimated characteristic velocity ($v_{ch}$).

**2.** Method according to Claim 1, **characterized in that** the mass (m) of the vehicle is estimated by means of an algorithm (8).

**3.** Method according to Claim 1, **characterized in that** information about the centre of gravity ($h_{sp}$) of the vehicle is determined from the estimated characteristic velocity ($v_{ch}$) and from the ratio of the wheel contact forces ($F_{N1}/F_{Nr}$) of wheels which are located opposite one another during cornering.

**4.** Method according to one of Claims 1 to 3, **characterized in that** an indicator variable (S), by means of which a stabilization intervention is enabled or deactivated, or a characteristic property of the tilt stabilization algorithm (4, 5, 8) is determined as a function of the mass (m) of the vehicle or the mass (m) of the vehicle and the information about the centre of gravity ($h_{sp}$) of the vehicle.

**5.** Method according to one of Claims 1 to 3, **characterized in that** a regulating threshold, a control error or a manipulated variable of the tilt stabilization algorithm (4, 5, 8) is determined as a function of the mass (m) of the vehicle or the mass (m) of the vehicle and the information about the centre of gravity ($h_{sp}$) of the vehicle.

**6.** Driving dynamics control system for stabilizing tilting in a vehicle in critical driving situations, comprising a control unit (1) in which a tilt stabilization algorithm (4, 5, 8) is stored, a sensor system (2) for sensing current actual values of driving state variables ($a_y$,day/dt,P,n), and an actuator (3) for carrying out a stabilizing intervention when a situation which is critical in terms of tilting is detected, wherein information about the mass (m) of the vehicle is determined by means of the sensor system (2), and the tilt stabilization algorithm (4, 5) is configured in such a way that the regulator behaviour is a function of the mass (m) of the vehicle, wherein the control unit (1) comprises an algorithm (8) for estimating information about the centre of gravity ($h_{sp}$) of the vehicle, wherein this information is taken into account, together with the mass (m) of the vehicle, in a tilt stabilizing process, **characterized in that** the information about the centre of gravity ($h_{sp}$) of the vehicle is derived from the estimated characteristic velocity ($v_{ch}$).

**7.** Driving dynamics control system according to Claim 6, **characterized in that** the control unit (1) comprises an algorithm (8) for estimating the mass (m) of the vehicle.

**8.** Driving dynamics control system according to Claim 6, **characterized in that** a sensor system (2, 6) is provided, by means of which a ratio of the wheel contact forces ($F_{N1}/F_{Nr}$) of wheels which are located opposite one another can be determined.

**Revendications**

1. Procédé de stabilisation au basculement d'un véhicule dans des situations de conduite critiques, avec lequel un algorithme de stabilisation au basculement (4, 5, 8) intervient dans la conduite au moyen d'un actionneur (3, 9, 10) afin de stabiliser le véhicule, la masse du véhicule (m) étant déterminée, une information sur le centre de gravité du véhicule ($h_{sp}$) étant estimée et l'algorithme de stabilisation au basculement (4, 5, 8) étant exécuté en fonction de la masse du véhicule (m) et de l'information sur le centre de gravité du véhicule ($h_{sp}$), **caractérisé en ce que** l'information sur le centre de gravité du véhicule ($h_{sp}$) est dérivée de la vitesse caractéristique estimée ($v_{ch}$).

2. Procédé selon la revendication 1, **caractérisé en ce que** la masse du véhicule (m) est estimée au moyen d'un algorithme (8).

3. Procédé selon la revendication 1, **caractérisé en ce que** l'information sur le centre de gravité du véhicule ($h_{sp}$) est déterminée à partir de la vitesse caractéristique estimée ($v_{ch}$) et du rapport des forces d'appui des roues ($F_{N1}/F_{Nr}$) des roues opposées lors d'une trajectoire en virage.

4. Procédé selon l'une des revendications 1 à 3, **caractérisé en ce qu'**il y a détermination d'une grandeur indicatrice (S) au moyen de laquelle une intervention dans la stabilisation est validée ou désactivée, ou d'une propriété caractéristique de l'algorithme de stabilisation au basculement (4, 5, 8) en fonction de la masse du véhicule (m) ou de la masse du véhicule (m) et de l'information sur le centre de gravité du véhicule ($h_{sp}$).

5. Procédé selon l'une des revendications 1 à 3, **caractérisé en ce qu'**il y a détermination d'un seuil de régulation, d'un écart de régulation ou d'une grandeur de commande de l'algorithme de stabilisation au basculement (4, 5, 8) en fonction de la masse du véhicule (m) ou de la masse du véhicule (m) et de l'information sur le centre de gravité du véhicule ($h_{sp}$).

6. Système de régulation dynamique de la conduite destiné à la stabilisation au basculement d'un véhicule dans des situations de conduite critiques, comprenant un module de commande (1) dans lequel est stocké un algorithme de stabilisation au basculement (4, 5, 8), un dispositif de détection (2) pour détecter les valeurs réelles actuelles des grandeurs d'état du véhicule ($a_y$, day/dt, P, n) et un actionneur (3) pour effectuer une intervention de stabilisation en cas de détection d'une situation critique de basculement, une information sur la masse du véhicule (m) étant déterminée au moyen du dispositif de détection (2) et l'algorithme de stabilisation au basculement (4, 5) étant conçu de telle sorte que l'action de régulation est une fonction de la masse du véhicule (m), le module de commande (1) comprenant un algorithme (8) pour estimer une information sur le centre de gravité du véhicule ($h_{sp}$), cette étant prise en compte conjointement avec la masse du véhicule (m) lors d'une stabilisation au basculement, **caractérisé en ce que** l'information sur le centre de gravité du véhicule ($h_{sp}$) est dérivée de la vitesse caractéristique estimée ($v_{ch}$).

7. Système de régulation dynamique de la conduite selon la revendication 6, **caractérisé en ce que** le module de commande (1) comprend un algorithme (8) d'estimation de la masse du véhicule (m).

8. Système de régulation dynamique de la conduite selon la revendication 6, **caractérisé en ce qu'**il est prévu un dispositif de détection (2, 6) au moyen duquel peut être déterminé un rapport des forces d'appui des roues ($F_{N1}/F_{Nr}$) des roues opposées.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003050741 A1
- US 4480714 A